# EUROPEAN PATENT APPLICATION

(11) **EP 2 950 590 A1**
(43) Date of publication of application: **02.12.2015**
(21) Application number: 14169777.1
(22) Date of filing: 26.05.2014
(51) Int. Cl.: H04W 48/10, H04W 84/18

(54) **Device selection according to proximity**

(71) Applicant: Nokia Technologies OY, 02610 Espoo (FI)
(72) Inventor: Reunamäki, Jukka, 33820 Tampere (FI); Palin, Arto, 37830 Viiala (FI); Ginman, Tommy, 02430 Masala (FI)
(74) Representative: Berggren Oy Ab

(57) **Abstract**

A technique for wireless communication is provided. According to an example embodiment, the technique comprises transmitting, from an apparatus for wireless communication, one or more outbound messages that comprise information regarding the apparatus, receiving, in the apparatus, one or more inbound messages addressing the apparatus, the one or more inbound messages comprising information facilitating connection establishment between the apparatus and a source of said one or more inbound messages, and determining, in the apparatus, whether said one or more inbound messages indicate said source to be in close proximity and accepting a connection request from said source in response to determining the source to be in close proximity.

## Description

### TECHNICAL FIELD

The example and non-limiting embodiments of the present invention relate to device discovery and selection for wireless communication.

### BACKGROUND

Establishing a wireless connection between two devices, including e.g. steps of device discovery, device selection and connection setup is in many occasions a complicated operation. Multitude of different communication techniques, communication protocols and user-interface components for controlling use of these techniques/protocols may make it uncomfortable or even difficult for a user of a device to successfully perform the steps required for establishing a connection.

### SUMMARY

According to an example embodiment, an apparatus for wireless communication is provided, the apparatus comprising means for transmitting one or more outbound messages that comprise information regarding the apparatus, means for receiving one or more inbound messages addressing the apparatus, the one or more inbound messages comprising information facilitating connection establishment between the apparatus and a source of said one or more inbound messages, means for determining whether said one or more inbound messages indicate said source to be in close proximity, and means for accepting a connection request from said source in response to determining the source to be in close proximity.

According to another example embodiment, an apparatus for wireless communication is provided, the apparatus comprising means for receiving one or more inbound advertising messages that comprise information regarding a source of the inbound advertising messages, means for determining whether said inbound advertising messages indicate said source to be in close proximity, and means for transmitting one or more outbound advertising messages addressing said source in response to determining the source to be in close proximity, which outbound advertising messages comprise an identification of said source and an indication of said source having been found to be in close proximity of the apparatus.

According to another example embodiment, a method is provided, the method comprising transmitting, from an apparatus for wireless communication, one or more outbound messages that comprise information regarding the apparatus, receiving, in the apparatus, one or more inbound messages addressing the apparatus, the one or more inbound messages comprising information facilitating connection establishment between the apparatus and a source of said one or more inbound messages, and determining, in the apparatus, whether said one or more inbound messages indicate said source to be in close proximity and accepting a connection request from said source in response to determining the source to be in close proximity.

According to another example embodiment, a method is provided, the method comprising receiving, in an apparatus for wireless communication, one or more inbound advertising messages that comprise information regarding a source of the inbound advertising messages, determining, in the apparatus, whether said inbound advertising messages indicate said source to be in close proximity, and transmitting, from the apparatus, one or more outbound advertising messages addressing said source in response to determining the source to be in close proximity, which outbound advertising messages comprise an identification of said source and an indication of said source having been found to be in close proximity of the apparatus.

According to another example embodiment, a computer program is provided, the computer program comprising computer readable program code configured to cause performing, when said program code is run on a computing apparatus, a method comprising transmitting, from a wireless communication apparatus, one or more outbound messages that comprise information regarding the wireless communication apparatus, receiving, in the wireless communication apparatus, one or more inbound messages addressing the wireless communication apparatus, the one or more inbound messages comprising information facilitating connection establishment between the wireless communication apparatus and a source of said one or more inbound messages, and determining, in the wireless communication apparatus, whether said one or more inbound messages indicate said source to be in close proximity and accepting a connection request from said source in response to determining the source to be in close proximity.

According to another example embodiment, a computer program is provided, the computer program comprising computer readable program code configured to cause performing, when said program code is run on a computing apparatus, a method comprising receiving, in a wireless communication apparatus, one or more inbound advertising messages that comprise information regarding a source of the inbound advertising messages, determining, in the wireless communication apparatus, whether said inbound advertising messages indicate said source to be in close proximity, and transmitting, from the wireless communication apparatus, one or more outbound advertising messages addressing said source in response to determining the source to be in close proximity, which outbound advertising messages comprise an identification of said source and an indication of said source having been found to be in close proximity of the wireless communication apparatus.

The computer program referred to above may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to an example embodiment of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 schematically illustrates some components of an example wireless communication arrangement.
Figure 2a schematically illustrates some components of a device according to an example embodiment.
Figure 2b schematically illustrates some components of a device according to an example embodiment.
Figure 3 illustrates example structure applied for advertising data and scan response data in the Bluetooth low energy (BLE) protocol.
Figure 4 illustrates a method according to an example embodiment.
Figure 5 illustrates a method according to an example embodiment.
Figure 6 illustrates a method according to an example embodiment.
Figure 7 illustrates an advertising data element according to an example embodiment.
Figure 8 illustrates an example of timing of scanning periods in relation to timing of the advertising events according to an example embodiment.

### DESCRIPTION OF SOME EMBODIMENTS

An approach for device discovery, device selection and connection setup that does not require user interaction may be referred to an automated connection establishment procedure or technique. Along similar lines, an approach for the same where only limited user interaction is required (e.g. initiation of the procedure) may be referred to as a semi-automated or partially automated connection establishment procedure or technique. An automated or semi-automated connection establishment typically results in an improved user-experience.

When considering a first device applying an automated or partially automated (also referred to as semi-automated) technique or procedure for selecting another device in the vicinity and establishing a wireless connection with the selected device, an intuitive approach comprises the first device selecting another device that is closest to the first device.

As an example in this regard, so-called touch-to-select (T2S) technique has been developed to facilitate a user-friendly approach for establishing the wireless connection between two devices. In the T2S technique, a first device (a selecting device) is brought to a close proximity of a second device (a discovered or discoverable device), or vice versa, and, consequently, an automatic device discovery, device selection and connection setup between the selecting device and the discovered device follows. The T2S technique involves applying, in the selecting device, a measure indicative of the strength of a radio signal originating from the discovered device as an approximation of distance between the two devices, e.g. such that a signal strength meeting one or more predefined criteria is considered as an indication of the discovered device being within a predefined range that is considered suitable for automatically establishing a wireless connection thereto.

In the T2S technique, the device discovery, i.e. the selecting device discovering the presence of a discoverable device, is based on the discoverable device transmitting one or more messages according to employed communication protocol that the selecting device receives. As an example, in the framework of the Bluetooth Low Energy (BLE) protocol a device may be discovered based one or more advertising messages transmitted in one or more advertising events originating from the device. As another example, in the framework of the Bluetooth (BT) Basic Rate / Enhanced Data rate (BR/EDR) protocol(s) a device and its offered services may be discovered based on Extended Inquiry Response (EIR) packet(s) and/or based on Frequency Hop Synchronization (FHS) packet(s) transmitted by the device. The selecting device is hence able to detect the presence of the discoverable device and to identify the discoverable device on basis of information received in such message(s). In the following, the term T2S (or T2S technique) is applied in a non-limiting to manner to refer to any connection establishment technique that is based on bringing the to-be-connected devices into close enough proximity to each other and where the selecting device makes a decision regarding the connection establishment based on detected or estimated signal strength between itself and the discovered device.

However, a basic implementation of the T2S technique provides one-sided device selection where the selecting device makes the decision to connect independently without a possibility for the discovered device to affect the decision. While in many occasions such mode of operation serves the desired purpose, in some occasions it might be preferable to enable two-sided selection where both the selecting device and the discovered device make a decision to proceed with connection establishment to the other device before the connection is established between the devices in order to guarantee sufficient connection quality and reliability. In the following, a term two-sided T2S (or two-sided T2S technique, 2-T2S for short) is used in a non-limiting manner to refer to any connection establishment technique that is based on the T2S technique and where also the discovered device contributes the final decision regarding the connection establishment between the selecting device and the discovered device.

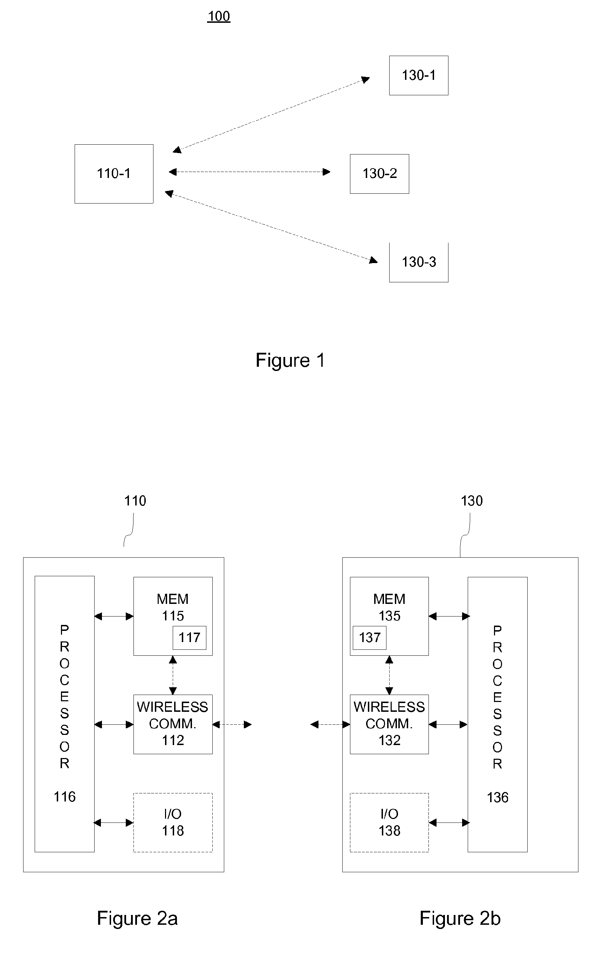

Figure 1 schematically illustrates some components or entities of a wireless communication arrangement 100 to depict an exemplifying framework for one or more embodiments of the present invention. The communication arrangement 100 may be considered to represent a use case where an automated or semi-automated connection establishment technique is applied, e.g. in context of the two-sided T2S technique outlined in the foregoing at a high level or by using another automated or semi-automated technique for device selection. The example communication arrangement 100 comprises a first device 110 and one or more second devices 130. In Figure 1, the communication arrangement 100 is depicted with three second devices 130-1, 130-2 and 130-3.

In the following, the term second device 130, when used in the singular form, is applied to jointly refer to any of the one or more second devices 130 (e.g. to the second device 130-1, 130-2 or 130-3) unless explicitly stated otherwise. Moreover, the first device 110 is configured to operate as a selecting device. In other words, the first device 110 is arranged to operate as a device that is arranged to select one of the one or more second devices 130 as a target device for establishment of a wireless connection. In corollary, each of the second devices 130 is arranged to operate as a discoverable device and/or as a discovered device that may serve as the target device for a connection attempt by the first device 110.

The first device 110 is typically, but not necessarily, a mobile device. Figure 2a schematically illustrates some components of an exemplifying first device 110. The first device 110 comprises a wireless communication portion 112 for wireless communication with other devices. The wireless communication portion 112 may enable, for example, communication with other devices using a short-range wireless communication technique or protocol that enables a point-to-point wireless connection with another device. The first device 110 is hence capable of communicating with other devices that are equipped with communication means using the same technique/protocol. The wireless communication portion 112 may be considered to include one or more wireless communication apparatuses included in (or hosted by) the first device 110 (or the first apparatus 110). The wireless communication portion 112 may be also considered as wireless communication means 112.

The first device 110 further comprises a processor 116 and a memory 115 for storing data and computer program 117. The first device 110 may further comprise user I/O (input/output) components 118 that may be arranged, possibly together with the processor 116 and a portion of the computer program 117, to provide a user interface for receiving input from a user of the first device 110 and/or providing output to the user of the first device 110. The processor 116 may be arranged to control operation of the first device 110 e.g. in accordance with the computer program 117 stored in the memory 115, in accordance with the user input received via the user I/O components 118 and/or in accordance with information received via the wireless communication portion 112. The memory 115 and the computer program 117 stored therein may be further arranged to, with the processor 116, to provide a control function for controlling operation of the wireless communication portion 112, possibly together with a control portion or a control function that may be provided within the wireless communication portion 112 (which will be described later in this text). The first device 110 may comprise further components or portions in addition to those depicted in Figure 2a.

The second device 130 may be a mobile device or a fixed device. Figure 2b schematically illustrates some components of an exemplifying second device 130. The second device 130 comprises a wireless communication portion 132 similar to the wireless communication portion 112, which may, for example, enable the short-range wireless communication with the first device 110 and/or with other devices equipped with communication means using the same technique/protocol. Along the lines described for the wireless communication portion 112, the wireless communication portion 132 may be considered to include one or more wireless communication apparatuses, and the wireless communication portion 132 may be also considered as a wireless communication means 132 included in (or hosted by) the second device 130.

The second device 130 further comprises a processor 136 and a memory 135 for storing data and computer program 137. The second device 130 may further comprise user I/O (input/output) components 138 that may be arranged, together with the processor 136 and a portion of the computer program 137, to provide a user interface for receiving input from a user of the second device 130 and/or providing output to the user of the second device 130. The processor 136 may be arranged to control operation of the second device 130 in accordance with the computer program 137 stored in the memory 135 and possibly further in accordance with the user input received via the user I/O components and/or in accordance with information received via the wireless communication portion 132. The memory 135 and the computer program 137 stored therein may be further arranged to, with the processor 136, to control operation of the wireless communication portion 132, possibly together with a control portion of a control function that may be provided within the respective communication portion 132, 134 (which will be described later in this text). The second device 130 may comprise further components or portions in addition to those depicted in Figure 2b.

Each of the wireless communication portions 112, 132 may be provided e.g. as a respective chipset and/or as a respective communication module. For clarity and brevity of description, each of the wireless communication portions 112, 132 is described as a single logical portion that may also be capable of processing at least some of the information received via the wireless connection and/or at least some of the information that is to be transmitted via the wireless connection without external control from other components of the respective device 110, 130 (e.g. from the processor 116, 136). In an embodiment, each of the wireless communication portions 112, 132 may comprise e.g. a wireless transceiver portion for wireless communication and a control portion (or a control function) for controlling operation of the wireless transceiver portion and for processing information received/transmitted via the wireless transceiver portion. Such a control portion may be provided by hardware means, by software means or by a combination of hardware means and software means. As an example in this regard, the wireless communication portion 112, 132 may comprise a memory and a processor, and the control portion may be provided by a computer program code stored in the memory, which computer program code is arranged to, with the processor, to control operation of the wireless communication portion 112, 132 either independently or jointly with the control function provided by the memory 115, 135, the computer program 117, 137 and the processor 116, 136 of the respective device 110, 130.

The wireless connection between the wireless communication portions 112 and 132 may be provided by a suitable short-range wireless communication technique or protocol. The term short-range wireless communication as used herein refers to a wireless communication technique or protocol that enables typical operational range in the scale of tens of meters, e.g. up to 100 meters. However, especially in an indoor environment, the operational range of such short-range wireless communication technique/protocol may be significantly shorter e.g. due to walls and other fixed structures as well as furniture etc. that are likely to partially block or interfere with the radio communication between the wireless communication portions 112 and 132. On the other hand, in favorable conditions in outdoor use the operational range may extend to several hundreds of meters. Examples of such wireless techniques/protocols include BT BR/EDR and BLE protocols referred to in the foregoing. Further examples include for example ZigBee (IEEE 802.15.4) and Z-Wave protocols.

While a number of short-range wireless communication techniques/protocols known in the art are applicable in the framework of the communication arrangement 100, in the following some aspects of various embodiments of the present invention are described with references to the BLE protocol. However, the BLE serves as an illustrative and non-limiting example in this regard, and the description generalizes into any wireless communication protocol where the first device 110 and the second device 130 are capable of establishing a wireless point-to-point connection therebetween on basis of messages transmitted from at least one of the first device 110 and the second device 130, as will be described in the following in more detail.

BLE operates in the unlicensed 2.4 GHz ISM band, in the same manner as the BR/EDR variant of the Bluetooth protocol suite. BLE supports packets from 10 octets to a maximum of 47 octets, thereby providing a low duty cycle. BLE employs a frequency hopping transceiver with many frequency hopping spread spectrum (FHSS) carriers, with a gross air data rate of 1 Megabit per second (Mb/s).

BLE is designed for applications that do not require high data rates and/or low latency, but which may benefit from a very-low power idle mode, from a simple device discovery, and from usage of short data packets. BLE protocol allows a star network topology in connections, where one device may serve as a master for a plurality of slave devices. The master device dictates the connection timing and communication operations of the one or more slave devices. BLE communicates over a total of 40 RF channels, separated by 2 MHz. Data communication between BLE devices occurs in 37 pre-specified data channels of the 40 RF channels. Data connection transmissions occur in connection events wherein a point-to-point connection is established between the master device and a slave device. However, it is also possible to transmit data in BLE advertising events (as will be described in the following). In the BLE protocol, a slave device may provide data through BLE communication to the master device to which it is connected and vice versa. The remaining 3 channels of the 40 RF channels are advertising channels used by devices to advertise their presence and capabilities. The BLE protocol defines a unidirectional connectionless broadcast mode on the advertising channels. A TDMA based polling scheme is used in which one device transmits a packet at a predetermined time and, when connected, a corresponding device responds with a packet after a predetermined interval.

The physical channel is sub-divided into time units known as events. Data is transmitted between BLE devices in packets that are positioned in these events. There are two types of events: Advertising events and Connection events. Devices that transmit advertising packets on the advertising Physical Layer (PHY) channels are referred to as advertisers or advertising devices. Devices that receive advertising on the advertising channels without immediate intention to connect to the advertising device are referred to as scanners or as scanning devices.

Transmissions on the advertising PHY channels occur in advertising events. At the start of each advertising event, the advertiser sends an advertising packet corresponding to an advertising event type. Depending on the type of the advertising packet, the scanner may make a request to the advertiser on the same advertising PHY channel which may be followed by a response from the advertiser on the same advertising PHY channel. The advertising PHY channel changes on the next advertising packet sent by the advertiser in the same advertising event. The advertiser may end the advertising event at any time during the event. The first advertising PHY channel is used at the start of the next advertising event.

Devices that wish to establish a connection to another device listen for connectable advertising packets. Such devices are referred to as initiators or initiator devices. If the advertiser is using a connectable advertising event, an initiator may make a connection request using the same advertising PHY channel on which it received the connectable advertising packet. The advertising event is ended and connection events begin if the advertiser receives and accepts the request for a connection to be initiated. Once the connection is established, the initiator becomes the master device in what is referred to as a piconet and the advertising device becomes the slave device. Connection events are used to send data packets between the master and slave devices.

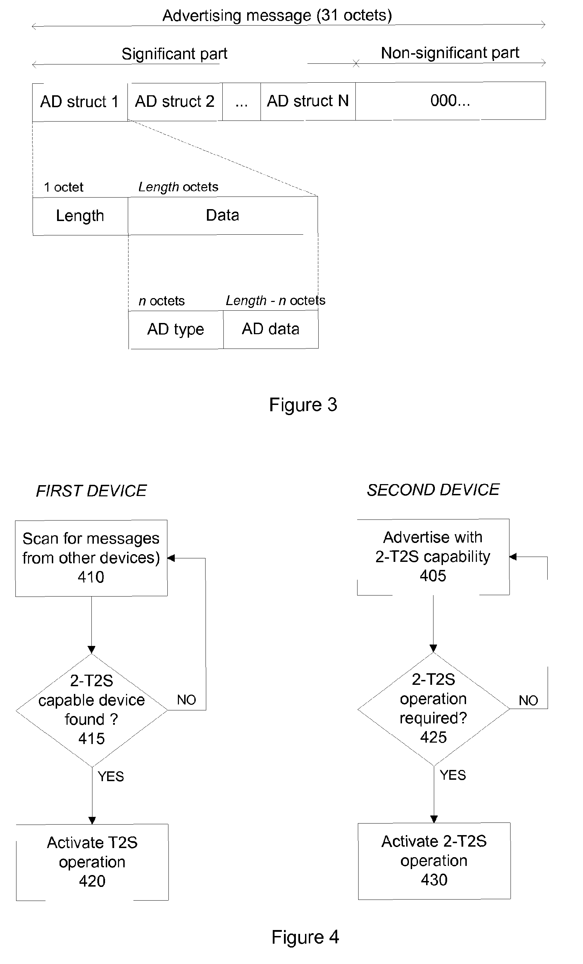

Figure 3 illustrates example structure applied for advertising data and scan response data in the BLE protocol. The advertising data comprises a significant part carrying the data and it may comprise all-zero the non-significant part if padding of the data size to 31 octets is needed. Only the significant part needs to be sent over the radio link. The significant part comprises a sequence of advertising data (AD) structures (represented by AD struct 1, AD struct 2 and AD struct N in Figure 3). Each AD structure contains the length value L (one octet) followed by the data octets (L octets). The data octets include the AD type field (n octets, depending on the AD type) followed by the AD data octets *(L - n* octets). Advertising data according to the example of Figure 3 may be transmitted in a BLE advertising message. Advertising data may be carried in the AdvData filed of an ADV_IND packet, an ADV_NONCONN_IND packet or an ADV_SCAN_IND packet. Scan response data may be carried in the ScanRspData filed of a SCAN_RSP packet. More detailed description of the advertising data and scan response data with the framework of BLE is provided e.g. in the Bluetooth Specification Version 4.0, Specification Volume 3 - Core System Package [Host volume] Part C, Section 11 (publication date 30 June 2010).

In the context of the communication arrangement 100, the user of the first device 110 may wish to establish a wireless connection with a certain second device 130, e.g. the second device 130-2. The connection establishment may be based on the two-sided T2S technique (2-T2S) outlined in the foregoing and described in more detail in the following, where the first device 110 serves as the selecting device and where the second device 130 serves as the discovered (or discoverable) device. The connection may be established for a specific pre-defined purpose, such as for providing sensory information available in the first device 110 to the second device 130 or vice versa, transferring an object, such as an image, a video file, a sound file, a document, etc. from the first device 110 to the second device 130 or vice versa. As another example, the connection may be established to enable transfer of data for a purpose to be decided or defined later on.

While the procedure including the device discovery, device selection and the connection establishment may be automated or semi-automated, the events leading initiation of such procedure(s) may be directly or indirectly user-initiated. As an example, these procedure(s) may be initiated by the user of the device 110, 130, via a user interface, activating the respective wireless communication portion 112, 132. As another example, these procedure(s) may be initiated by the user of the device 110, 130, via the user interface, activating an application (e.g. software) that is arranged to employ the respective wireless communication portion 112, 132 to share information with one or more other devices. As a further example, the connection establishment may be initiated by a user of the first device 110 and/or the second device 130.

In a scenario where there are multiple second devices 130 available within the operating range of the first device 110 (as in the example scenario of Figure 1), there may be some confusion regarding which of the second devices 130 should serve as the target for connection establishment by the first device 110. Along similar lines, if there are multiple first devices 110 trying to establish a wireless connection with one of the second devices 130, there may be some confusion regarding with which of the first devices 110 the connection should be established. In the following, examples of a two-sided T2S technique for establishing the wireless connection between the first device 100 and the second device 130 are described in an exemplifying and non-limiting manner.

In framework of the BLE protocol, the first device 110 serves as a scanning device and/or initiator device, whereas the second device 130 serves as an advertising device.

As an exemplifying overview regarding processing carried out by entities of the communication arrangement 100 and regarding information exchange between entities of the communication arrangement 100 according to an example embodiment, e.g. the steps outlined in the following and depicted as a method 400 in Figure 4 may be carried out in order to facilitate establishing a connection between the first device 110 and one of the second devices 130 in an automated or semi-automated manner.
i) the second device 130 advertising its presence to other devices by transmitting one or more messages that may comprise an identifier indicative of 2-T2S capability (block 405);
ii) the first device 110 scanning for messages from other devices (block 410);
iii) the first device 110 detecting the second device 130 as a 2-T2S-capable device (block 415);
iv) the first device 110 activating the 2-T2S operation (block 420);
v) the second device 130 activating the two-sided T2S operation (block 430) in response to detecting the first device 110 having activated the 2-T2S operation (block 425) or in response to the second device 130 requiring use of the 2-T2S operation;
vi) the first device 110 requesting a connection to the second device 130 e.g. in response to finding the signal strength in messages originating from the second device 130 sufficient;
vii) the second device 130 accepting or rejecting the connection request from the first device 110 e.g. in view of the signal strength derived on basis of one or more messages transmitted between the first device 110 and the second device 130.

Note that these high level steps are not necessarily listed and/or depicted in their order of occurrence. Moreover, some of these steps may be omitted or combined with other steps. These conceptual steps may be varied in a number of ways. As an example in this regard, two examples of such variants, especially regarding the step v), are outlined in the following.

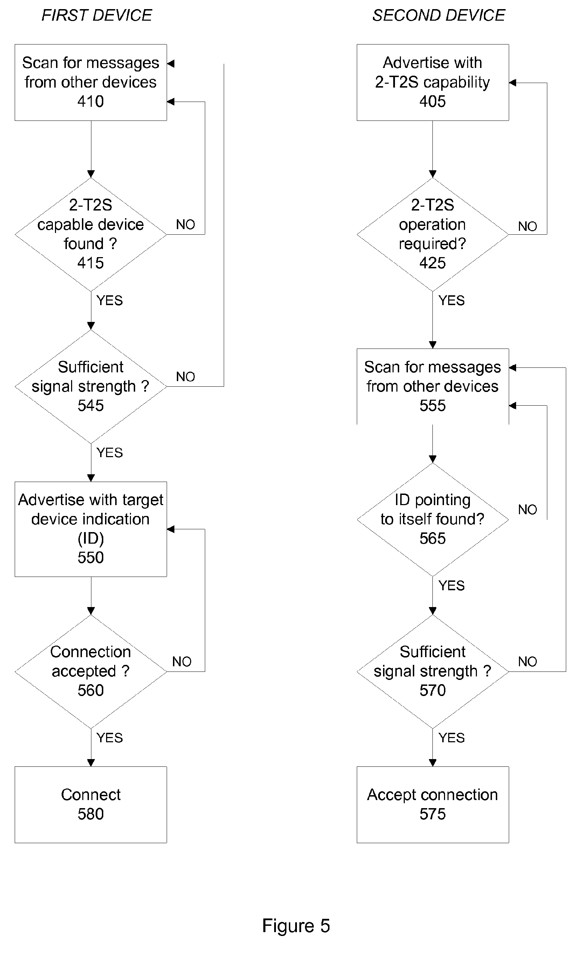

Figure 5 illustrates an exemplifying method 500 that outlines operation according to a first exemplifying variant of the method 400, where, according to an example embodiment, e.g. the following steps may be carried out after first device has detected the second device 130:
- the first device 110 advertising its presence to other devices by transmitting one or more messages that comprise an identifier indicative of T2S capability and an identification of the second device 130 (block 550) e.g. in response to having found the signal strength in messages originating from the second device 130 sufficient (block 545);
- the second device 130 scanning for messages from other devices (block 555);
- the first device 110 continuing the advertisement until finding the connection to be accepted by the second device 130 (block 560) or until a timeout occurs
- the second device 130 (pre-)accepting a connection from the first device 110 (block 575) in response to having detected the first device 110 targeting the 2-T2S related messages addressed to itself (block 565) and e.g. in response to having found the signal strength in these messages originating from the first device 110 sufficient (block 570);
- the second device 130 transmitting to the first device 110 an indication regarding acceptance of the connection between the devices;
- the first device 110 connecting with the second device 130 (block 580).

In a further variation of the first exemplifying variant outlined above, the first device 110 may request connection with the second device 130 e.g. after a predefined period since having found the signal strength in messages originating from the second device 130 sufficient (in block 545) or after a predefined period since having started advertising its presence to other devices (in block 550).

In the course of the first exemplifying variant, the connection between the first device 110 and the second device 130 is hence established in response to both devices having found the signal strength from the other device sufficient.

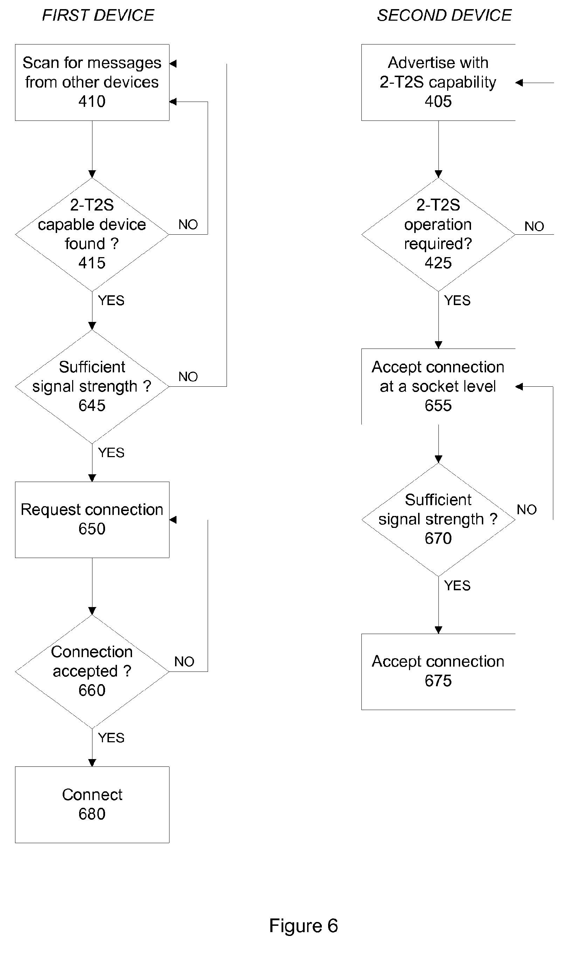

Figure 6 illustrates an exemplifying method 600 that outlines operation according to a second exemplifying variant of the method 400, where, according to an example embodiment, e.g. the following steps may be carried out:
- the first device 110 requesting connection with the second device 130 (block 650) e.g. in response to having found the signal strength in messages originating from the second device 130 sufficient (block 645);
- the second device 130 accepting the connection at a socket level (block 655);
- the first device 110 continuing the connection request procedure until finding the connection to be (fully) accepted by the second device 130 (block 660);
- the second device 130 accepting the connection requested by the first device 110 (block 675) also on the protocol or profile level (e.g. fully accepting the connection) e.g. in response to having found the signal strength in messages originating from the first device 110 received during the socket level connection sufficient (block 670);
- the first device 110 connecting with the second device 130 (block 680).

As in case of the first variant, also in the course of the second variant the connection between the first device 110 and the second device 130 is hence established in response to both devices having found the signal strength from the other device sufficient.

In the following, some aspects of the automated or semi-automated connection establishment according to the outline(s) described above are described in more detail in an exemplifying and non-limiting manner with references to the communication arrangement 100, the first device 110 and the second device 130.

In this document, the term advertising event is used in a non-limiting manner to refer to a mechanism for providing information about the presence, characteristics and/or operational state of (the wireless communication portion 112, 132) the device 110, 130. The advertising event may comprise one or more advertising messages or messages of other type transmitted by the first device 110 or the second device 130. The advertising messages may be transmitted in one or more advertising events, such that an advertising message may carry one or more advertising data elements.

The advertising messages, and hence the advertising data elements, may be transmitted and received via one or more dedicated advertising channels, whereas transfer of data between the devices 110, 130 may be carried out via one or more dedicated data channels. The advertising channel(s) may also be referred to as control channel(s). As another example, there may be no dedicated wireless communication channels for transfer of the advertising messages and data but the transfer of both the advertising messages and data may employ one or more shared channels that hence serve both as advertising (or control) channel(s) and as data channel(s).

An advertising message transmitted from the first device 110 or from the second device 130 comprises an identification of the respective transmitting device 110, 130 to identify the source of the advertising message. The identification may comprise e.g. a media access control (MAC) address or other address or identifier assigned to the respective transmitting device 110, 130 and/or to the wireless communication portion 112, 132 thereof. Information specific to the 2-T2S operation may be carried in one or more advertising messages included in the advertising event.

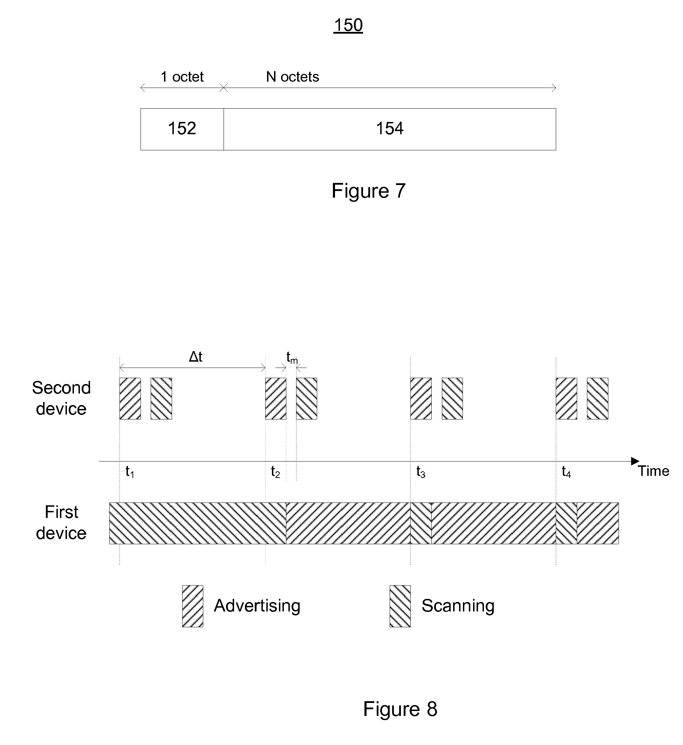

Figure 7 schematically illustrates an exemplifying advertising data element 150 that may be used to carry information pertaining to the 2-T2S operation. The advertising data element 150 comprises a first information element 152 that carries a data type indication d_ID and a second information element 154 that carries data associated with the 2-T2S operation. The size of the first information element 152 may be e.g. one octet (eight bits) whereas the size of the second information element 154 may depend on the data type indicated in the first information element 152. As an example, the data type indication may be set to d_ID=0xFF to indicate that the second information element carries manufacturer specific data. Consequently, the second information element 154 may carry an indication and/or data related to the 2-T2S operation, e.g. one or more of the following:
- a 2-T2S capability indication to indicate that the device transmitting the advertising data element 150 is capable of providing the 2-T2S operation;
- a 2-T2S operation indication to indicate that the device transmitting the advertising data element 150 applies the 2-T2S operation;
- a target identifier to identify a target device discovered by the device transmitting the advertising data element 150;
- a connection quality indication to indicate the connection quality between the target device and the device transmitting the advertising data element 150;
- an application/service indication to indicate the application and/or service offered or requested by the device transmitting the advertising data element 150;

As an example for carrying the advertising data element 150 over a wireless link, in case the BLE protocol is applied, one or more advertising data element 150 may be included as respective AD structures in an advertising message transmitted in a BLE advertising event such that the AD type field carries the first information element 152 and the AD data octets carry the second information element 154 (see Figure 3).

A starting point for the device discovery, selection and connection establishment procedure is that the first device 110 is brought into a close proximity of a selected one of the second devices 130 to initiate the connection establishment therebetween e.g. by using the T2S operation or the 2-T2S operation. The first device 110 and the selected second device 130 are operated in the state the where the respective wireless communication portions 112, 132 are active and hence operating in a state where automated or semi-automated connection establishment is possible.

The second device 130 may be arranged to transmit one or more messages to advertise its presence to other devices. These advertising message(s) can be considered to constitute a single advertising event originating from the second device 130 and the advertising event of one or more messages may be repeated according to a predefined schedule, e.g. at predefined intervals. In the framework of BLE protocol these message(s) may be transmitted as one or more advertising packets or scan response packets, e.g. as an ADV_IND packet, as an ADV_NONCONN packet, as an ADV_SCAN_IND packet or as an SCAN_RSP packet. Advertising messages of an advertising event comprise information regarding the second device 130, e.g. the identification of the second device (as described in the foregoing). Advertising messages of an advertising event may further comprise information regarding capabilities of the second device 130 and/or information regarding services available at and/or supported by the second device 130.

Advertising message of an advertising event transmitted by the second device 130 may further comprise the 2-T2S capability indication to indicate that the second device 130 is capable of providing the 2-T2S operation. The 2-T2S capability indication may be considered as an indication that the device transmitting the indication is capable of applying proximity based criteria in the connection establishment procedure. While there are numerous possibilities for carrying the 2-T2S capability indication, in the following it can be assumed that this indication is carried using the advertising data element 150 described in the foregoing. As another example, an explicit 2-T2S capability indication may not be needed. In such a scenario the first device 110 may have a priori knowledge regarding the second device 130 having the capability to apply the 2-T2S operation or the capability to apply the 2-T2S operation in the second device 130 may be assumed or it may be implicit (e.g. based on the context). Moreover, in some scenarios it may not be necessary for the first device 110 to have indication regarding the second device 130 having the capability to apply the 2-T2S operation but the first device 110 may proceed with applying its share of the 2-T2S operation regardless.

The first device 110 may be arranged to scan for advertising messages from other devices. The first device 110 may be further arranged to activate the 2-T2S operation therein in response to having detected the second device 130 to be capable of providing the 2-T2S operation. This detection may comprise the first device 110 detecting one or more of the messages of the advertising event received from the second device 130 to carry the 2-T2S capability indication. The first device 110 may be arranged to provide the second device 130 with the 2-T2S operation indication to indicate that the first device 110 is active in providing the 2-T2S operation. This indication may be transmitted to the second device 130 in a dedicated message or as a dedicated information element in a message that also carries further information addressed to the second device 130. As a further example, explicit 2-T2S operation indication may be omitted and the second device 130 may be arranged to imply the first device 110 being active in providing the 2-T2S operation on basis of (other) message(s) received from the first device 110. Examples of different mechanisms for providing the second device 130 with information that invokes the 2-T2S operation therein will be described later in this text. As a further example, the second device 130 may not need an explicit indication of the first device 110 being capable of providing or being active in providing the 2-T2S operation but the second device 130 may proceed with applying its share of the 2-T2S operation regardless.

When the second device 130 makes a decision to apply the 2-T2S operation, e.g. when it learns that the first device 110 has activated or initiated the 2-T2S operation, the second device 130 may proceed with activating the 2-T2S operation in its end. In this regard, the second device 130 may be arranged to activate the 2-T2S operation therein in response to having received the 2-T2S operation indication from the first device 110 or in response to having deduced on basis of other information received from the first device 110 that the first device 110 has activated the 2-T2S operation in its end. As a further alternative, the second device 130 may be configured to carry out the 2-T2S operation regardless of having received an explicit or implicit indication in this regard from the first device 130.

As an outcome of the 2-T2S operation either the connection between the first device 110 and the second device 130 is enabled or accepted by the second device 130 or the connection is disabled or rejected by the second device 130.

The first device 110 may be configured to select the second device 130 as a target device for connection establishment in response to finding the second device 130 to be in close (enough) proximity of the first device 110. The determination of the proximity of the second device 130 may be based on a connection quality indicator *Q₁* that is descriptive of the strength of a radio connection between the first device 110 and the second device 130.

The connection quality indicator *Q₁* may be derived on basis of one or more advertising messages received from the second device 130. The derivation process may include deriving a received signal strength indication (RSSI) on basis of one or more advertising messages received from the second device 130 in one or more advertising events. In this regard, we may denote a RSSI value, which serves an indication of the received signal strength in the messages originating from the respective second device 130, by *R₁.* The RSSI value *Rᵢ* may be derived, for example, as the RSSI of a single message received from the respective second device 130, as an average of the RSSIs of a plurality of messages received from the respective second device 130, or as a minimum or maximum of the RSSIs of a plurality of messages received from the respective second device 130.

Consequently, the connection quality indicator *Q₁* may be derived on basis of the RSSI value and/or on basis of another value descriptive of the received signal strength. As an example, the connection quality indicator *Q₁* may be derived directly as the RSSI value *R₁* (e.g. *Q₁ = R₁*)*.* Consequently, higher value of *Q₁* implies higher strength of the radio connection - and typically higher value of *Q₁* also implies shorter distance between the first device 110 and the respective second device 130. The first device 110 may be arranged to derive or update the connection quality indicator *Q₁* (e.g. the RSSI value *R₁*) according a predefined schedule, e.g. at predefined intervals.

The first device 110 may be further configured to select the second device 130 as a target device for connection establishment on basis of the connection quality indication *Q₁*. In this regard, the first device 110 may be configured to select the second device 130 as the target device and to proceed with the connection establishment thereto in response the connection quality indicator *Q₁* derived for the target device indicating radio connection strength that exceeds a predefined quality threshold, e.g. the RSSI value *R₁* exceeding a predefined threshold *Th*_{A} (e.g. when *R₁ > Th_{A}*)*.* In contrast, the first device 110 may be configured to refrain from selecting the second device 130 as the target device and/or refrain from proceeding with the connection establishment in response to the connection quality indicator *Q₁* failing the meet the quality threshold, e.g. the RSSI value *R₁* failing to exceed the threshold *Th*_{A} (e.g. when *R₁ ≤ Th*_{A})*.* This corresponds to selecting the second device 130 as the target device and proceeding with the connection establishment procedure provided that the second device 130 is within a close enough proximity of the first device 110 for the purpose of establishing connection thereto. Depending on the applied criteria (e.g. the threshold *Th*_{A})*,* such 'close enough proximity' may be considered, for example, to represent a 'touching range', in other words a range where the first device 110 and the second device 130 are in or close to being in physical touch with each other.

Once having selected the second device 130 as the target device, the first device 110 may be arranged to proceed with 2-T2S related operations. In this regard, the first device 110 may be configured to transmit an explicit indication regarding activation and/or initiation of the 2-T2S operation to the second device 130 to enable also the second device 130 to timely active the 2-T2S operation in its end. The explicit indication may be provided as the 2-T2S operation indication in a message transmitted to the second device 130. Instead of providing the explicit 2-T2S operation indication, the first device 110 may rely on the second device 130 implicitly detecting activation of the 2-T2S operation by the first device 110 on basis of subsequent messages or information received from the first device 110 or rely on the 2-T2S capable second device 130 to be active in providing the 2-T2S operation in its end regardless of any indications from the first device 110.

The first device 110 may be further configured to transmit one or more messages to advertise its presence to other devices and to the second device 130 in particular. These advertising message(s) can be considered to constitute a single advertising event originating from the first device 110 and the advertising event of one or more messages may be repeated according to a certain schedule. This schedule may be a predetermined one (e.g. advertising events commenced at predefined intervals) or the schedule may depend on timing of the advertising events received from the second device 130. The timing of the advertising events transmitted from the first device 110 will be described later in this text.

One or more advertising messages of the advertising event transmitted by the first device 110 may comprise the 2-T2S operation indication to indicate that the first device 110 is active in providing the 2-T2S operation. While there are numerous possibilities for carrying the 2-T2S capability indication, in the following it can be assumed that this indication is carried using the advertising data element 150 described in the foregoing.

Instead of or in addition to the 2-T2S capability indication, one or more advertising messages of the advertising event transmitted from the first device 110 may comprise the application/service indication to explicitly indicate to the second device 130 the service offered thereto or requested therefrom by the first device 110. The application/service indication may indicate e.g. that the first device 110 is ready to share sensor data (e.g. temperature information) or that the first device 110 requests sensor data. As another example, the application/service indication may indicate e.g. that the first device 110 is ready to share a file or another object (e.g. in image or a video file) or that the first device 110 is ready to receive a file or another object from the second device 130.

One or more advertising messages of the advertising event transmitted from the first device 110 may be addressed to the second device 130. In this regard, one or more messages of the advertising event originating from the first device 110 may comprise the target identifier that identifies or addresses the second device 130 as the target device for connection establishment selected by the first device 110. Additionally or alternatively, these message(s) identifying or addressing the second device may also serve as indication to the second device 130 regarding the first device 110 having detected the second device 130 and/or regarding the first device 110 having activated the 2-T2S operation. The identification of the second device 130 may comprise the identifier of the second device 130 received earlier in an advertising message originating from the second device 130. The identification may comprise e.g. a media access control (MAC) address of the second device 130 or other address or identifier assigned to the second device 130 and/or to the wireless communication portion 132 thereof.

One or more messages of the advertising event transmitted from the first device 110 may further comprise the connection quality indication *Q₁,* e.g. the RSSI value *R₁*, that indicates the strength of the radio connection between the first device 110 and the selected second device 130. The connection quality indication *Q₁* may serve as an indication of the distance between the first device 110 and the second device, thereby facilitating the evaluation of the proximity of the first device 110 to the second device 130. As described in the foregoing, the first device 110 may be arranged to derive or update the value of the connection quality indication *Q₁* (e.g. as the RSSI value *R₁*) according to the predefined schedule. Moreover, the first device may be arranged to use the most recently derived or updated value of the connection quality indication *Q₁* in the transmitted advertising messages addressed to the second device 130.

In the framework of BLE protocol the advertising message(s) originating from the first device 110 may be transmitted as one or more advertising messages type of ADV_IND, ADV_SCAN_IND, ADV_DIRECT_IND or SCAN_RSP packets. In case the ADV_DIRECT_IND advertising packet type is applied, it may be addressed to the second device 130. Consequently, an explicit target indication may in the advertising message(s) of the ADV_DIRECT_IND packet may be omitted since the message anyway addresses the second device 130.

When the second device 130 has activated the 2-T2S operation, it scans for messages from other devices in order to detect 2-T2S related information originating from the first device 110 or other 2-T2S capable devices. In this regard, the second device 130 is configured to scan for messages from other devices between the advertising events transmitted from the second device 130. The timing of the scanning periods in relation to the advertising events will be described later in this text.

The second device 130 may be configured to activate the 2-T2S operation in its end in response to detecting the 2-T2S operation indication in one or more of the received messages and/or in response to detecting information that implies the 2-T2S operation having been activated or initiated by the source of the respective message(s). As described in the foregoing, the information that implies activation/initiation of the 2-T2S operation having taken place in the first device 110 may comprise e.g. the target identifier and/or the connection quality indication received in one or more advertising messages received from the first device 110.

When the 2-T2S operation in the second device 130 has been activated, the second device may be arranged to look for information that identifies it as the target for the 2-T2S operation carried out in the first device 110. In this regard, the second device 130 may be further configured to initiate the connection establishment procedure in its end in response to detecting information that indicates or implies 2-T2S operation activated/initiated in the first device 110 addressing the second device 130. The second device 130 detecting the first device 110 having addressed the second device 130 as the target of the 2-T2S connection establishment may comprise detecting the target identifier received in an advertising message pointing to the second device 130. As another example, in the framework of the BLE protocol the second device 130 detecting the first device 110 addressing the second device 130 as the target of the 2-T2S connection establishment may comprise detecting the 2-T2S operation indication in an ADV_DIRECT_IND packet addressed to the second device 130.

The second device 130 may be configured to accept the first device 110 that has selected the second device 130 as the target device for the 2-T2S connection establishment in response to determining the first device 110 to be in close (enough) proximity of the second device 130. Evaluation of the proximity may be carried out, for example, on basis of the connection quality indication *Q₁* received in one or more advertising message(s) originating from the first device 110. In this regard, the second device 130 may be arranged to accept the connection request from the first device 110 (further) in response the connection quality indicator *Q₂* that is derived on basis of one or more values of the connection quality indicator *Q₁* received from the first device 110 indicating radio connection strength that exceeds a predefined quality threshold. The connection quality indicator *Q₂* may be derived, for example, as the connection quality indicator *Q₁* received in a single message from the first device 110, as an average of the connection quality indicators *Q₁* received in a plurality of messages from the first device 110, or as a minimum or maximum of the connection quality indicators *Q₁* received in a plurality of messages from the first device 110.

In case the connection quality measure(s) *Q₁* received from the first device comprise the RSSI value(s) *R₁,* the connection quality measure *Q₂* may be provided as a RSSI value *R₂* that is derived e.g. on basis of a single *R₁* received from the first device 110 or on basis of average, minimum or maximum of a plurality of *R₁*'s received from the first device 100. In such a scenario, the connection quality indicator *Q₂* exceeding the quality threshold may comprise the RSSI value *R₂* exceeding a predefined threshold *Th*'_{A} (e.g. when *R₂ > Th'*_{A})*.* In contrast, the second device 130 may be configured to refrain from accepting the connection in response the connection quality indicator *Q₂* failing to meet the quality threshold, e.g. the RSSI value *R₂* failing to exceed the threshold *Th*'_{A} (e.g. when *R₂ ≤ Th'*_{A}*).* The threshold *Th'*_{A} may be the same as the threshold *Th*_{A} described in the foregoing, implying that the first device 110 and the second device 130 are arranged to use similar same criteria for the proximity detection. As another example, the threshold *Th*'_{A} may be lower or higher than the threshold *Th*_{A} to enable the second device 130 to apply, respectively, a more relaxed or more stringent proximity criterion than that applied by the first device 110.

Alternatively or additionally, the second device 130 may be configured to measure and/or to compute the connection quality indicator Q*₂* or another measure that serves as an indication of the proximity of the first device 110 in response to having detected itself as the target device for the 2-T2S connection establishment by the first device 110. The connection quality indicator *Q₂* is descriptive of the strength of a radio connection between the second device 130 and the first device 110 having transmitted the advertising message(s), and the connection quality indicator *Q₂* may be measured/computed e.g. on basis of a RSSI value derived on basis one or more advertising messages received from the first device 110 in a similar manner as described in the foregoing. This RSSI value may be referred to as the RSSI value *R₂* and it may be computed/derived in a similar manner as described in the foregoing for derivation of the RSSI value *R₁* in the first device 110 with the exception that the derivation is based on one or more messages received from the first device 110. In this regard, the second device 130 may be configured to accept the connection in response to the connection quality indicator *Q₂* indicating radio connection strength that exceeds a predefined quality threshold, e.g. the RSSI value *R₂* exceeding a predefined threshold *Th*_{B} (e.g. when *R₂ > Th*_{B}*).* In contrast, the second device 130 may be configured to refrain from accepting the connection in response the connection quality indicator *Q₂* failing the meet the quality threshold, e.g. the RSSI value *R₂* failing to exceed the threshold *Th*_{B} (e.g. when *R₂ ≤ Th*_{B}*).* As above, the threshold *Th*_{B} applied in the second device 130 may be the same as or different from the threshold *Th*_{A} applied in the first device 110 to enable applying a proximity criterion similar to or different from that applied in the first device 110.

The second device 130 may be configured to transmit, in response to having accepted the connection to/from the first device 110, an explicit indication in this regard to the first device 110. The explicit indication may be carried e.g. using an advertising data element 150 where the second information element 154 carries the indication. As an example, such an explicit indication may be transmitted as a dedicated message or the indication may be included in one or more advertising messages transmitted from the second device 130. The indication may carry an identifier that identifies the first device and/or the message carrying the indication may be explicitly addressed to the first device 110. Consequently, the first device 110 may be arranged to request connection to the second device 130 in response to having received the indication.

Alternatively or additionally, the first device 110 may be arranged to request connection to the second device 130 in response to having found the second device 130 to be in close (enough) proximity. In this regard, the first device 110 may be arranged to request the connection after a predefined waiting period since having selected the second device 130 as the target device for connection establishment (or since having found the second device to be in close (enough) proximity). As another example, the first device 110 may be arranged to request the connection after a predefined waiting period since having initiated transmission of the advertising events addressing the second device 130.

As an example, in the framework of the BLE protocol, the first device 110 may be arranged to request the connection by transmitting a Pairing Request command in accordance with the Low Energy Security Manager Protocol (SMP), whereas the second device 130 may be arranged to indicate acceptance of the connection by transmitting a Pairing Request Response command in accordance with the Low Energy SMP.

A further criterion for the second device 130 accepting the connection requested by the first device 110 may involve evaluation of the application/service indication that may be present in the advertising message(s) received from the first device 110. In this regard, the second device 130 may be arranged to accept the connection in response to the second device 130 being capable of receiving the indicated service or information offered from the first device 110 or being capable of providing the service or information requested by the first device 110.

As another example, additionally or alternatively, the second device 130 may be configured include, in one or more advertising messages transmitted therefrom, the application/service indication to explicitly indicate to the first device 110 (and to other devices) the service or information offered from the second device 130 and/or service or information requested by the second device 130. Consequently, the first device 110 may be configured to include, in one or more advertising messages addressing the second device 130, an indication of the service/information it requests from the second device 110 or an indication of the service/information it is able to provide to the second device 130.

The upper graph in Figure 8 provides an illustrative example of timing of scanning periods in relation to the advertising events in the second device 130. As Figure 8 indicates, the advertising event is repeated at (temporal) transmission intervals denoted by *Δt,* and each instance of the advertising event is followed by a scanning period after time margin of *tᵢ* after conclusion of the respective instance of the advertising event. The transmission interval *Δt* may be for example in the range from 10 to 2560 milliseconds (ms), e.g. 1280 ms. Although depicted as periods of similar time duration in Figure 8, the duration of the advertising event may be different from that of the scanning period.

The lower graph in Figure 8 provides a corresponding timing example for the first device 110. In general, once having captured the schedule of advertising events originating from the second device 130 after a period of continuous scanning, the first device 110 switches into advertising mode, which is periodically interrupted by scanning periods that temporally coincide with respective advertising events originating from the second device 130. In order to provide such schedule of operation, the first device 110 may be further configured to record the reception times *tᵢ* (where *i =* 1, 2, 3, ...) of the advertising events received from the second device 130 and derive the reception interval(s) *Δtᵢ = tᵢ - tᵢ₋₁* between two consecutive detected advertising events. In case the advertising events originating from the second device 130 comprise more than one message, the reception interval Δ*tᵢ* may be derived on basis of the reception times *tᵢ* of the first messages of the respective advertising events.

Consequently, after having detected a predetermined number of advertising events from the second device 130 (e.g. two advertising events), the first device 110 may switch to operate in the advertising mode. The advertising mode, however, is periodically interrupted by a scanning period at *tᵢ + Δtᵢ* after commencement of the advertising event *i* from the second device 130 to enable receiving possibly updated information from the second device 130 in a subsequent advertising event. The first device 110 may be configured to continue the advertising mode interrupted by scanning periods until the connection to the second device 130 is accepted or refused and/or for a predefined maximum period of time.

Instead of transmitting advertising messages that indicate 2-T2S operation and selection of the second device 130 as the target device for the 2-T2S connection establishment, the first device 110 may be configured to directly proceed with requesting connection to the 2-T2S capable second device 130 after having found is as an eligible target device for connection establishment on basis of the connection quality indication *Q₁.* The connection request may include the connection quality indication *Q₁* derived in the first device 110 to enable the second device 130 to possibly make use of this information in a decision process carried out in order to determine whether the first device 110 is within close (enough) proximity of the second device 130.

In this approach, as a first phase, the second device 130 is arranged to accept the connection at a socket level without further verification of the connection quality between the second device 130 and the first device 110. However, before making the decision to accept the connection also at the protocol (or profile) level, the second device 130 may be configured to determine whether the first device 110 is in close (enough) proximity of the second device 130 based on information received upon connection setup and/or based on information derived in the second device 130 on basis of one or more messages received via the socket level connection to the first device 110. Evaluation of the proximity may be based, for example, on the connection quality indication *Q₁* that may be received in the connection request from the first device 130 and/or on the connection quality indication *Q₂* that may be derived in the second device 130. In this regard, the second device 130 may be configured to measure and/or to compute the connection quality indicator *Q₂* along the lines described in the foregoing (e.g. on basis of the RSSI value *R₂),* with the difference that in this scenario the connection quality indicator *Q₂* is derived on basis of one or more messages received via the socket level connection between the first device 110 and the second device 130. As an example for deriving the connection quality indicator Q₂ in the framework of the BT or the BLE protocol, the second device 130 may be configured to issue the Read RSSI command via the host controller interface (HCl), which causes event messages including link RSSI information to be returned. The Read RSSI command returns RSSI value of specific handle, which identifies a logical link to certain device, e.g. to the first device 110. The link RSSI value is defined by the link controller, which may be arranged to send link level packets to another device to derive RSSI of packets generated by the other end responding to sent packets or arranged to use existing packet communication for the RSSI derivation. In addition, the link level may derive RSSI of the connection all the time, hence returning already measured RSSI value when the Read RSSI command is issued.

Consequently, as a second phase, the second device 130 is arranged to accept the connection also at the protocol/profile level in response to finding the first device 110 to be in close (enough) proximity of the second device 130. This may be evaluated, for example, by determining whether the connection quality indicator *Q₁* and/or the connection quality indicator *Q₂* indicate radio connection strength that exceeds a respective predefined quality threshold, e.g. whether the RSSI value *R₁* (that may be received as the connection quality indicator *Q₁*) exceeds a predefined threshold *Th*_{A} (e.g. when *R₁ > Th*_{A}) and/or whether the RSSI value *R₂* exceeds the predefined threshold *Th*_{B} (e.g. when *R₂ > Th*_{B})*.* In contrast, the second device 130 may be configured to refuse the connection request and hence refrain from connecting at the protocol/profile level in response to the connection quality indicator *Q₁* and/or the connection quality indicator *Q₂* failing to meet the respective quality threshold. The second device 130 may be further configured to refuse the connection, e.g. to disconnect the socket level connection, in response to the connection quality indicator *Q₁* and/or the connection quality indicator *Q₂* failing to exceed the respective quality threshold within a predefined time window since accepting the socket level connection.

In the foregoing, operation of the first device 110 and the second device 130 and the information exchange between the devices in context of device discovery, device selection and connection establishment has been described with references to the advertising messages and responses thereto, which is an approach that applicable for example in the framework of the BLE protocol.

As an alternative scenario, the device discovery, device selection and connection establishment may be based on the first device 110, initially, transmitting one or more inquiry messages in order to discover other devices and the second device 130 scanning for inquiry messages, with the second device 130 further responding with received inquiry message(s) by transmitting one or more inquiry response messages. Subsequently, when the first and second devices 110, 130 have concluded (or assumed) that also the other device supports and/or applies the 2-T2S operation, the second device 130 may transmit one more inquiry messages while the first device 110 scans for inquiry messages, and the first device 110 responds to received inquiry message(s) by transmitting one or more inquiry response messages.

In this alternative scenario, the information related to the 2-T2S operation described in the foregoing that is transferred between the first device 110 and the second device 130, e.g. the 2-T2S capability indication, the 2-T2S operation indication, the target identifier, the connection quality identification and/or the application/service indication, may be carried in the inquiry response messages, e.g. by using the (advertising) data element 150. Furthermore, in this alternative scenario the first or second device 110, 130 transmitting the one or more inquiry messages (conceptually) corresponds to the respective device scanning for the other device, whereas the first or second device 110, 130 scanning for the inquiry messages and transmitting the one or more inquiry response messages (conceptually) corresponds to the respective device transmitting one or more advertising messages. Thus, considering the modes of operation of the first and second devices 110, 130 in the alternative scenario in context of the timing example illustrated in Figure 8, the time periods depicted and described as scanning periods correspond to time periods of the respective device 110, 130 operating in a mode where it is arranged to send the inquiry messages (e.g. operate in an inquiry state), whereas the time periods depicted as advertising periods correspond to time periods of the respective device 110, 130 operating in a mode where it is arranged to scan for inquiry messages and to transmit the inquiry response messages (e.g. operating in an inquiry and/or inquiry response state).

The alternative scenario is applicable, for example, to operation in the framework of the BT BR/EDR protocol. In this regard, the one or more inquiry messages may comprise one or more ID packets and the one or more inquiry response message(s) may comprise one or more FHS packets and/or one or more EIR packets. The information related to the 2-T2S operation may be carried, for example, in EIR packets.

Referring back to Figures 2a and 2b, the processor 116 is configured to read from and write to the memory 115 and the processor 136 is configured to read from and write to the memory 135. Although the processor 116, 136 is depicted as a single component, the processor 116, 136 may be implemented as one or more separate components. Similarly, although the memory 115, 135 is illustrated as a single component, the memory 115, 135 may be implemented as one or more separate components, some or all of which may be integrated/removable and/or may provide permanent / semi-permanent/ dynamic/cached storage.

The memory 115 may store the computer program 117 comprising computer-executable instructions that control the operation of the apparatus 110 when loaded into the processor 116. As an example, the computer program 117 may include one or more sequences of one or more instructions. The computer program 117 may be provided as a computer program code. The processor 116 is able to load and execute the computer program 117 by reading the one or more sequences of one or more instructions included therein from the memory 115. The one or more sequences of one or more instructions may be configured to, when executed by the processor 116, cause the apparatus 110 to carry out operations, procedures and/or functions described in the foregoing in context of the first device 110. Hence, the apparatus 110 may comprise at least one processor 116 and at least one memory 115 including computer program code for one or more programs, the at least one memory 115 and the computer program code configured to, with the at least one processor 116, cause the apparatus 110 to perform operations, procedures and/or functions described in the foregoing in context of the first device 110.

The memory 135 may store a computer program 137 comprising computer-executable instructions that control the operation of the apparatus 130 when loaded into the processor 136. As an example, the computer program 137 may include one or more sequences of one or more instructions. The computer program 137 may be provided as a computer program code. The processor 136 is able to load and execute the computer program 137 by reading the one or more sequences of one or more instructions included therein from the memory 135. The one or more sequences of one or more instructions may be configured to, when executed by the processor 136, cause the apparatus 130 to carry out operations, procedures and/or functions described in the foregoing in context of the second device 130. Hence, the apparatus 130 may comprise at least one processor 136 and at least one memory 135 including computer program code for one or more programs, the at least one memory 135 and the computer program code configured to, with the at least one processor 136, cause the apparatus 130 to perform operations, procedures and/or functions described in the foregoing in context of the second device 130.

The computer program 117 may be provided e.g. as a computer program product comprising at least one computer-readable non-transitory medium having program code stored thereon, the program code, when executed by the apparatus 110, causing the apparatus at least to perform operations, procedures and/or functions described in the foregoing in context of the first device 110. The computer program 137 may be provided e.g. as a computer program product comprising at least one computer-readable non-transitory medium having program code stored thereon, the program code, when executed by the apparatus 130, causing the apparatus at least to perform operations, procedures and/or functions described in the foregoing in context of the second device 130.

The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. An apparatus for wireless communication comprising
means for transmitting one or more outbound messages that comprise information regarding the apparatus;
means for receiving one or more inbound messages addressing the apparatus, the one or more inbound messages comprising information facilitating connection establishment between the apparatus and a source of said one or more inbound messages;
means for determining whether said one or more inbound messages indicate said source to be in close proximity; and
means for accepting a connection request from said source in response to determining the source to be in close proximity.

2. An apparatus according to claim 1,
wherein said transmitting comprises transmitting said outbound messages as outbound advertising messages in outbound advertising events that commence according to a predetermined schedule; and wherein said receiving comprises scanning for said inbound advertising messages during scanning periods that occur between said outbound advertising events.

3. An apparatus according to claim 1,
further comprising means for establishing a socket level wireless connection to said source in response to receiving, from said source, a connection request for a wireless connection; and
wherein said inbound messages comprise one or more inbound data messages received via said socket level wireless connection prior to establishment of the requested wireless connection.

4. An apparatus according to any of claims 1 to 3, wherein said determining comprises determining whether a connection quality indication that is descriptive the strength of a radio connection between the apparatus and said source exceeds a predefined threshold.

5. An apparatus according to claim 4, wherein said inbound messages comprise a remote connection quality indication derived in the source and wherein said determining comprises determining whether said remote connection quality indication exceeds said predefined threshold.

6. An apparatus according to claim 4, further comprising means for deriving a local connection quality indication on basis of said inbound messages, wherein said determining comprises determining whether said local connection quality indication exceeds said predefined threshold.

7. An apparatus for wireless communication comprising means for receiving one or more inbound advertising messages that comprise information regarding a source of the inbound advertising messages;
means for determining whether said inbound advertising messages indicate said source to be in close proximity; and
means for transmitting one or more outbound advertising messages addressing said source in response to determining the source to be in close proximity, which outbound advertising messages comprise
an identification of said source; and
an indication of said source having been found to be in close proximity of the apparatus.

8. An apparatus according to claim 7,
wherein said determining comprises determining whether a connection quality indication that is descriptive of the strength of a radio connection between the apparatus and said source exceeds a predefined threshold; and
wherein said indication of said source having been found to be in close proximity of the apparatus comprises said connection quality indication.

9. An apparatus according to claim 8, further comprising means for deriving said connection quality indication on basis of said inbound advertising messages.

10. An apparatus according to any of claims 7 to 9,
wherein said receiving comprises scanning for said inbound advertising messages during scanning periods that occur according to a schedule that is based on past reception times of inbound advertising events; and wherein said transmitting comprises transmitting the outbound advertising messages in outbound advertising events that commence between said scanning periods.

11. An apparatus according to any of claims 7 to 10, further comprising one of the following:
means for requesting connection to said source in response to having received an indication regarding the source having accepted a connection to the apparatus, and
means for requesting connection to said source after a predefined waiting period since having determined said source to be in close proximity.

12. A method comprising
transmitting, from an apparatus for wireless communication, one or more outbound messages that comprise information regarding the apparatus;
receiving, in the apparatus, one or more inbound messages addressing the apparatus, the one or more inbound messages comprising information facilitating connection establishment between the apparatus and a source of said one or more inbound messages;
determining, in the apparatus, whether said one or more inbound messages indicate said source to be in close proximity and accepting a connection request from said source in response to determining the source to be in close proximity.

13. A method according to claim 12, wherein said determining comprises determining whether a connection quality indication that is descriptive the strength of a radio connection between the apparatus and said source exceeds a predefined threshold.

14. A method comprising
receiving, in an apparatus for wireless communication, one or more inbound advertising messages that comprise information regarding a source of the inbound advertising messages;
determining, in the apparatus, whether said inbound advertising messages indicate said source to be in close proximity; and transmitting, from the apparatus, one or more outbound advertising messages addressing said source in response to determining the source to be in close proximity, which outbound advertising messages comprise
an identification of said source; and
an indication of said source having been found to be in close proximity of the apparatus.

15. A method according to claim 14,
wherein said determining comprises determining whether a connection quality indication that is descriptive of the strength of a radio connection between the apparatus and said source exceeds a predefined threshold; and
wherein said indication of said source having been found to be in close proximity of the apparatus comprises said connection quality indication.

16. A computer program comprising computer readable program code configured to cause performing of the method of any of the claims 14 to 15 when said program code is run on a computing apparatus.
